# EUROPEAN PATENT APPLICATION

(11) **EP 4 167 110 A1**
(43) Date of publication of application: **19.04.2023**
(21) Application number: 22826642.5
(22) Date of filing: 21.03.2022
(51) Int. Cl.: G06F 16/957

(54) **METHOD AND APPARATUS FOR DISPLAYING INFORMATION FLOW, DEVICE, AND MEDIUM**

(30) Priority: 31.08.2021 CN 202111012142
(71) Applicant: BEIJING BAIDU NETCOM SCIENCE AND TECHNOLOGY CO., LTD., Beijing 100085 (CN)
(72) Inventor: ZHANG, Yifan, Beijing 100085 (CN); WANG, Yugi, Beijing 100085 (CN); CHU, Linfei, Beijing 100085 (CN); NING, Jing, Beijing 100085 (CN); SUN, Kunjie, Beijing 100085 (CN); ZHENG, Yuhang, Beijing 100085 (CN); Song, Naifei, Beijing 100085 (CN); ZHANG, Shujuan, Beijing 100085 (CN); LIU, Lin, Beijing 100085 (CN); JU, Xunzhuo, Beijing 100085 (CN); CHEN, Zhengwei, Beijing 100085 (CN); ZHANG, Wei, Beijing 100085 (CN); ZHANG, Hua, Beijing 100085 (CN); ZHOU, Congjun, Beijing 100085 (CN); WU, Tingkang, Beijing 100085 (CN); LU, Tengfei, Beijing 100085 (CN); LIU, Hanmeng, Beijing 100085 (CN); WANG, Lei, Beijing 100085 (CN)
(74) Representative: Laqua, Bernd Christian Kurt
(86) International application number: PCT/CN2022/082071
(87) International publication number: WO 2023/029443

(57) **Abstract**

The present disclosure provides a method and apparatus for displaying an information flow on a terminal device, an electronic device, a computer-readable storage medium, and a computer program product, relates to the field of computers, and in particular, to information flow technologies, intelligent recommendation technologies, and software application technologies. An implementation is: in response to detecting an activation operation on an application for displaying the information flow, reproducing, on the terminal device, a first page displayed on the terminal device when the application is last switched to running in the background or closed; and in response to determining that a time interval between the activation operation and the application being last switched to running in the background or closed does not exceed a first threshold, displaying a second page as a continuation of a content entry displayed in the first page, where the second page includes at least one first content entry cached in the terminal device before the activation operation but not displayed in the first page.

## Description

### CROSS-REFERENCE TO RELATED APPLICATIONS

The present application claims priority to Chinese Patent Application No. 202111012142.6 filed on August 31, 2021, which is incorporated herein by reference in its entirety.

### TECHNICAL FIELD

The present disclosure relates to the field of computers, in particular to information flow technologies, intelligent recommendation technologies, and software application technologies, and specifically to a method and apparatus for displaying an information flow on a terminal device, an electronic device, a computer-readable storage medium, and a computer program product.

### BACKGROUND

In current information flow technologies, refreshing behaviors for an information flow may be generally divided into user active refreshing and automatic refreshing based on different executers, where the user active refreshing is to refresh the information flow in response to an operation of a user, and the automatic refreshing is that a display carrier of the information flow (e.g., a terminal device or an application running thereon) or a producer of the information flow (e.g., a server) performs judgment in real time according to a corresponding preset rule to determine whether to refresh the information flow. The automatic refreshing enables the user to access to new content more frequently to improve content consumption efficiency of the user. However, the automatic refreshing is a "forced" choice for the user, which affects experience of the user to some extent.

The methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

### SUMMARY

The present disclosure provides a method and apparatus for displaying an information flow on a terminal device, an electronic device, a computer-readable storage medium, and a computer program product.

According to an aspect of the present disclosure, there is provided a method for displaying an information flow on a terminal device. The method includes: in response to detecting an activation operation on an application for displaying the information flow, reproducing, on the terminal device, a first page displayed on the terminal device when the application is last switched to running in the background or closed; and in response to determining that a time interval between the activation operation and the application being last switched to running in the background or closed does not exceed a first threshold, displaying a second page as a continuation of a content entry displayed in the first page, where the second page includes at least one first content entry cached in the terminal device before the activation operation but not displayed in the first page.

According to another aspect of the present disclosure, there is provided an apparatus for displaying an information flow on a terminal device. The apparatus includes: a display unit, configured to: in response to detecting an activation operation on an application for displaying the information flow, reproduce, on the terminal device, a first page displayed on the terminal device when the application is last switched to running in the background or closed, where the display unit is further configured to: in response to determining that a time interval between the activation operation and the application being last switched to running in the background or closed does not exceed a first threshold, display a second page as a continuation of a content entry displayed in the first page, where the second page includes at least one first content entry cached in the terminal device before the activation operation but not displayed in the first page.

According to another aspect of the present disclosure, there is provided an electronic device, including: at least one processor; and a memory communicatively connected to the at least one processor, where the memory stores instructions executable by the at least one processor, and when executed by the at least one processor, the instructions cause the at least one processor to perform the above method for displaying an information flow on a terminal device.

According to another aspect of the present disclosure, there is provided a non-transitory computer-readable storage medium storing computer instructions, where the computer instructions are used to cause a computer to perform the above method for displaying an information flow on a terminal device.

According to another aspect of the present disclosure, there is provided a computer program product, including a computer program, where when the computer program is executed by a processor, the above method for displaying an information flow on a terminal device is implemented.

According to one or more embodiments of the present disclosure, the first page displayed on the terminal device when the application is switched to running in the background or closed is recorded, such that a historical information flow browsed by a user and a historical browsing position can be stored; and the first page is displayed when the user switches back to or reopens the application, such that the user can return to the historical information flow at a low operation cost to search for impressive content or content of interest, which helps the user to review a browsed content entry, thereby improving content consumption experience of the user on the information flow. In addition, the second page is displayed as a continuation of the first interface, such that the user may continue to browse content not browsed in the historical information flow, thereby maintaining continuity of browsing and reading of the user and further improving experience of the user.

It should be understood that the content described in this section is not intended to identify critical or important features of the embodiments of the present disclosure, and is not used to limit the scope of the present disclosure either. Other features of the present disclosure will be easily understood through the following description.

### BRIEF DESCRIPTION OF THE DRAWINGS

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.
FIG. 1 is a schematic diagram of an exemplary system in which various methods described herein can be implemented according to an embodiment of the present disclosure;
FIG. 2 is a flowchart of a method for displaying an information flow on a terminal device according to an embodiment of the present disclosure;
FIGs. 3A to 3C are schematic diagrams of transitioning from a first page to a second page in a page sliding manner according to an embodiment of the present disclosure;
FIGs. 4A and 4B are schematic diagrams of transitioning from a first page to a second page in a page sliding manner according to an embodiment of the present disclosure;
FIGs. 5A and 5B are schematic diagrams of transitioning from a first page to a second page in a page sliding manner according to an embodiment of the present disclosure;
FIG. 6 is a flowchart of a method for displaying an information flow on a terminal device according to an embodiment of the present disclosure;
FIGs. 7A to 7C are schematic diagrams of transitioning from a first page to a third page in a page sliding manner according to an embodiment of the present disclosure;
FIG. 8 is a flowchart of a method for displaying an information flow on a terminal device according to an embodiment of the present disclosure;
FIG. 9 is a structural block diagram of an apparatus for displaying an information flow on a terminal device according to an embodiment of the present disclosure;
FIG. 10 is a structural block diagram of an apparatus for displaying an information flow on a terminal device according to an embodiment of the present disclosure;
FIG. 11 is a structural block diagram of an apparatus for displaying an information flow on a terminal device according to an embodiment of the present disclosure; and
FIG. 12 is a structural block diagram of an exemplary electronic device that can be used to implement an embodiment of the present disclosure.

### DETAILED DESCRIPTION OF EMBODIMENTS

Exemplary embodiments of the present disclosure are described below with reference to the accompanying drawings, where various details of the embodiments of the present disclosure are included for a better understanding, and should be considered as merely exemplary. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. In addition, the term "and/or" used in the present disclosure encompasses any of and all possible combinations of listed items.

In the present disclosure, an "information flow" refers to a set of content entries that can be presented, in a list-like manner, in an information flow carrier running on a terminal device. Common information flow carriers include information applications, social applications, browsers, or other programs having a content browsing function. For ease of description, in the embodiments of the present disclosure, the "application" is mainly used as the information flow carrier. However, this is not intended to limit the scope of the present disclosure. It can be understood that, as a direct replacement of the conventional means, using methods for displaying an information flow of the present disclosure in other information flow carriers are all included within the protection scope of the present disclosure.

A generation process of the information flow may usually include the following steps. At a server, a specific number of content entries are selected by screening from an information pool based on a user portrait, contextual information, a current hot topic, or the like, and these content entries are sorted to generate an original information flow. A background of the information flow carrier obtains some content entries in batches in the original information flow from the server. These content entries are displayed in a specific display region of the information flow carrier, and a total length of these content entries is usually greater than a length of the display region. Therefore, a user may turn a page in manners such as sliding to browse through this batch of content entries. When the user approaches or has browsed to the bottom of this batch of content entries, the background of the information flow carrier obtains a next batch of content entries from the server to display the content entries on a display interface. The information flow carrier and the server may repeat the above process until all content entries in the original information flow are obtained and browsed, and may also reconstruct the original information flow to provide reconstructed information flow content for the user after an instruction for refreshing the information flow from the user, the server, or the information flow carrier is detected. It should be noted that the above description is merely an exemplary generation process of the information flow, in which some steps and features are not necessarily required. The method of the present disclosure may be used to display the information flow generated in the above manner, and may also be used to display an information flow generated in another manner, which is not limited herein.

In the present disclosure, "browsing" and "reading" are used to refer to two different degrees of ways of obtaining information from a content entry in the information flow, where "browsing" may refer to a short visual stay of a user on content entries when the user slides on an information flow page, and such a visual stay may give the user an impression on these content entries. Simply, all content entries that have been displayed on the terminal device may be taken as content entries that are "browsed" by the user. However, "reading" may refer to a relative long visual stay of the user on content entries and/or a further operation on the content entries (e.g., opening a related page, expanding clipped content, clicking to play, or the like), which indicates that the user is interested in these content entries. It should be noted that a distinction between "browsing" and "reading" in the present disclosure is merely for an illustrative purpose, and is neither intended to limit a specific presenting method of the information flow and the content entries, nor to limit a specific interactive operation between the user and the information flow. In some cases, "browsing" and "reading" may alternatively have the same meaning or may be used interchangeably.

In the related art, in an existing method for displaying an information flow, the information flow is reconstructed when the user returns to a display interface of the information flow, and default content of a first screen is displayed, but such a manner interrupts a scenario of the information flow that the user last browses. As a result, it is difficult or even impossible for the user to return to a historical information flow to search for specific content, or continue to browse through content that is not browsed in the historical information flow.

To solve the above problems, a first page displayed on the terminal device when an application is switched to running in the background or closed is recorded, such that a historical information flow browsed by the user and a historical browsing position can be stored; and the first page is displayed when the user switches back to or reopens the application, such that the user can return to the historical information flow at a low operation cost to search for impressive content or content of interest, which helps the user to review a browsed content entry, thereby improving content consumption experience of the user on the information flow. In addition, a second page is displayed as a continuation of a first interface, such that the user may continue to browse content not browsed in the historical information flow, thereby maintaining continuity of browsing and reading of the user and further improving experience of the user.

The embodiments of the present disclosure will be described below in detail with reference to the accompanying drawings.

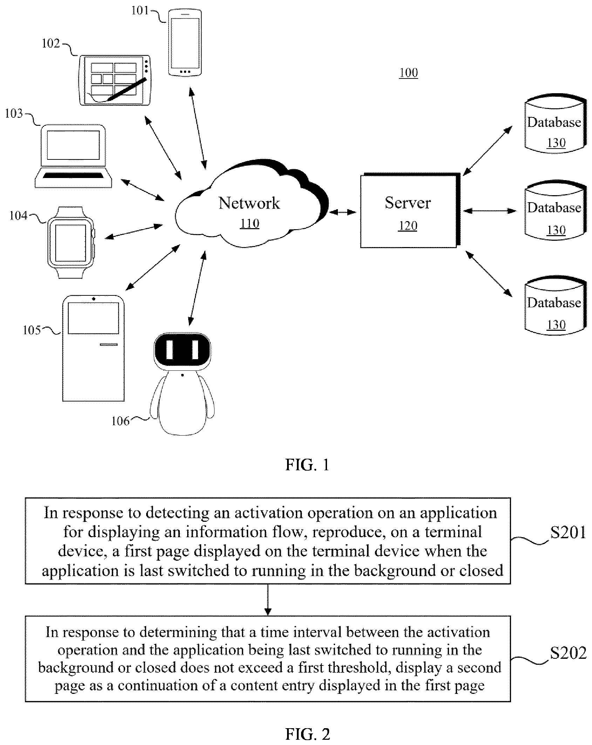

FIG. 1 is a schematic diagram of an exemplary system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more applications.

In an embodiment of the present disclosure, the server 120 can run one or more services or software applications that can execute a method for displaying an information flow on a terminal device.

In some embodiments, the server 120 may further provide other services or software applications that may include a non-virtual environment and a virtual environment. In some embodiments, these services may be provided as web-based services or cloud services, for example, provided for a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client applications to interact with the server 120, thereby utilizing the services provided by these components. It should be understood that various system configurations are possible, which may be different from the system 100. Therefore, FIG. 1 is an example of the system for implementing various methods described herein, and is not intended to be limiting.

The user may use the client device 101, 102, 103, 104, 105, and/or 106 to read and browse the information flow presented on the client device (i.e., a terminal device). The client device may provide an interface that enables the user of the client device to interact with the client device. The client device may also output information to the user via the interface. Although FIG. 1 depicts only six types of client devices, those skilled in the art will understand that any number of client devices are possible in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software applications and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various applications, such as various Internet-related applications, communication applications (e.g., email applications), and short message service (SMS) applications, and can use various communication protocols.

The network 110 may be any type of network well known to those skilled in the art, and it may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any of the above operating systems and any commercially available server operating system. The server 120 can also run any one of various additional server applications and/or middle-tier applications, including an HTTP server, an FTP server, a CGI server, a JAVA server, a database server, etc.

In some implementations, the server 120 may include one or more applications to analyze and merge data feeds and/or event updates received from users of the client devices 101, 102, 103, 104, 105, and 106. The server 120 may further include one or more applications to display the data feeds and/or real-time events via one or more display devices of the client devices 101, 102, 103, 104, 105, and 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store information such as an audio file and a video file. The data repository 130 may reside in various locations. For example, a data repository used by the server 120 may be locally in the server 120, or may be remote from the server 120 and may communicate with the server 120 via a network-based or dedicated connection. The data repository 130 may be of different types. In some embodiments, the data repository used by the server 120 may be a database, such as a relational database. One or more of these databases can store, update, and retrieve data from or to the database, in response to a command.

In some embodiments, one or more of the databases 130 may also be used by an application to store application data. The database used by the application may be of different types, for example, may be a key-value repository, an object repository, or a regular repository backed by a file system.

The system 100 of FIG. 1 may be configured and operated in various manners, such that the various methods and apparatuses described according to the present disclosure can be applied.

According to an aspect of the present disclosure, there is provided a method for displaying an information flow on a terminal device. As shown in FIG. 2, the method includes: step S201: in response to detecting an activation operation on an application for displaying the information flow, reproducing, on the terminal device, a first page displayed on the terminal device when the application is last switched to running in the background or closed; and step S202: in response to determining that a time interval between the activation operation and the application being last switched to running in the background or closed does not exceed a first threshold, displaying a second page as a continuation of a content entry displayed in the first page, where the second page may include at least one first content entry cached in the terminal device before the activation operation but not displayed in the first page.

Therefore, the first page displayed on the terminal device when the application is switched to running in the background or closed is recorded, such that a historical information flow browsed by a user and a historical browsing position can be stored; and the first page is displayed when the user switches back to or reopens the application, such that the user can return to the historical information flow at a low operation cost to search for impressive content or content of interest, which helps the user to review a browsed content entry, thereby improving content consumption experience of the user on the information flow. In addition, the second page is displayed as a continuation of the first interface, such that the user may continue to browse content not browsed in the historical information flow, thereby maintaining continuity of browsing and reading of the user and further improving experience of the user.

According to some embodiments, the activation operation on the application for displaying the information flow in step S201 may be, for example, an operation of switching the application running in the background to running in the foreground, or an operation of opening the application that is not running, or may be another operation that can activate the application for displaying the information flow to run in the foreground, which is not limited herein. The first page displayed when the application is last switched to running in the background or closed is reproduced on the terminal device, such that the user can see the content in the last browsed historical information flow again, to achieve continuity of reading and browsing, and help the user recall impressive content or content of interest that the user has browsed or read in the historical information flow, thereby making it easy for the user to search the historical information flow for these content.

According to some embodiments, step S202 of displaying a second page as a continuation of a content entry displayed in the first page enables the user to continue with reading and browsing from the last browsed position in the historical information flow. In some embodiments, the second page may include at least one first content entry cached in the terminal device before the activation operation but not displayed in the first page, so that the user may still continue to read, offline, the content entry not browsed in the historical information flow. In some embodiments, the first content entry may be, for example, a content entry obtained from a server in the last batch and not displayed on a display interface.

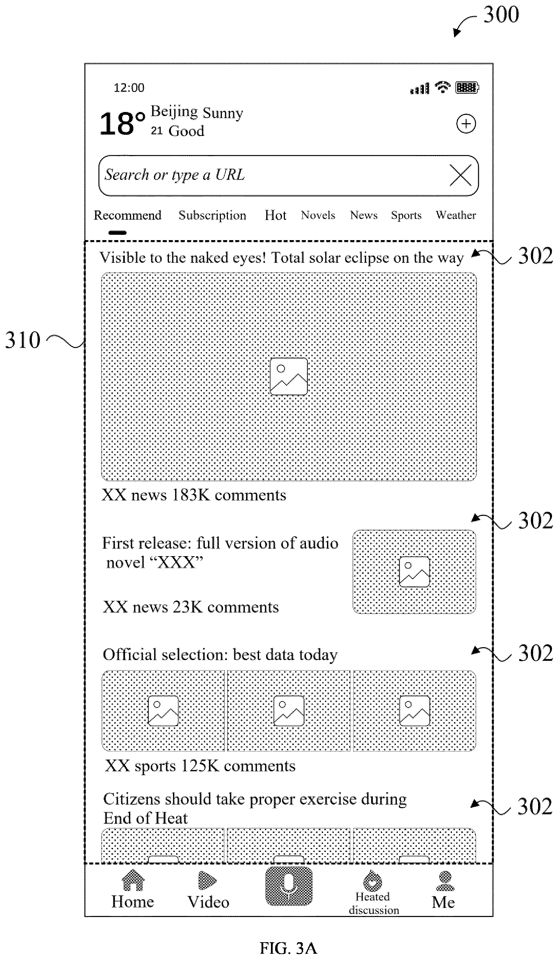

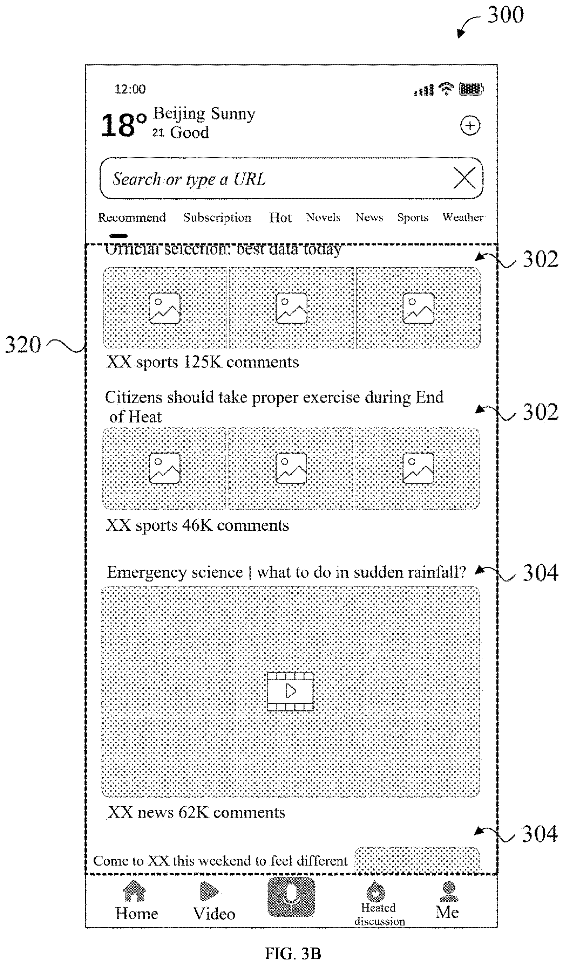

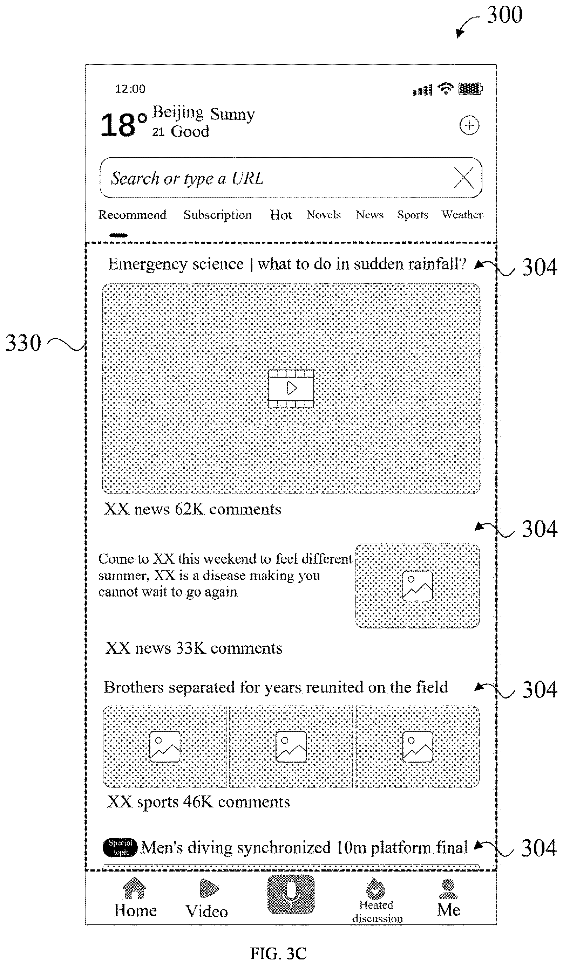

According to some embodiments, step S202 of displaying a second page as a continuation of a content entry displayed in the first page may include: transitioning from the first page to the second page in a page sliding manner. As shown in FIG. 3A, in a display interface 300 of an application, a first page 310 includes a plurality of browsed content entries 302. In an exemplary embodiment, the first page 310 in FIG. 3A is slid upward to transition to a second page 320 in FIG. 3B, where the second page 320 includes the plurality of browsed content entries 302 and two first content entries 304. In another exemplary embodiment, the first page in FIG. 3A is slid to transition to a second page 330 in FIG. 3C, where the second page 330 includes only a plurality of first content entries 304.

Therefore, through transitioning from the first page to the second page in a page sliding manner, a visual prompt is provided for a customer to make a user perceive that the content entry in the first page and the content entry in the second page are continuous, so as to improve continuity for the user to browse an information flow.

According to some embodiments, the content entry displayed in the first page may include a second content entry located at the bottom of the first page. Step S202 of displaying a second page as a continuation of a content entry displayed in the first page may include: in response to determining that a display area of the second content entry in the first page does not exceed a second threshold, displaying the second content entry at the top of the second page. Therefore, when the display area of the second content entry at the bottom of the first page does not exceed the second threshold, the application determines that the user does not browse the second content entry, thereby displaying the second content entry at the top of the second page to prevent the user from missing some content entries.

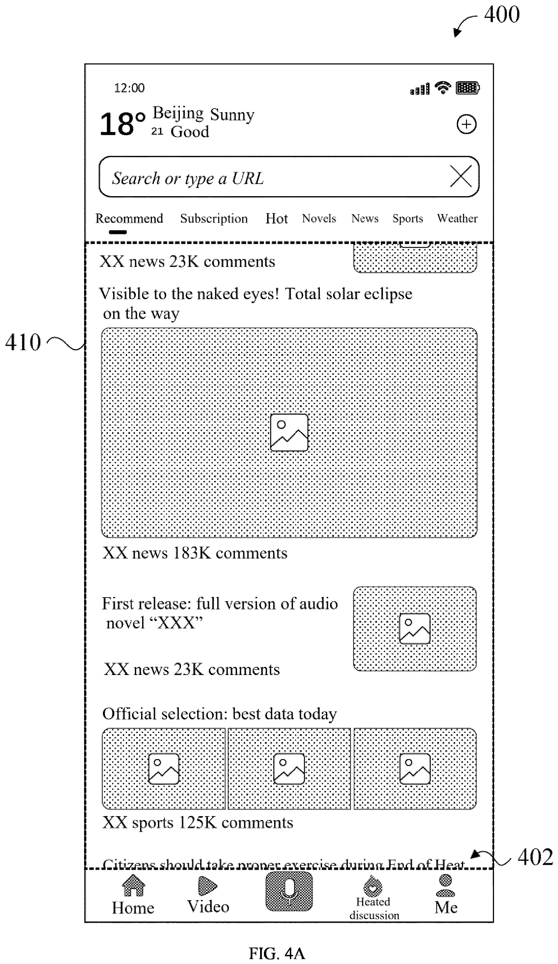

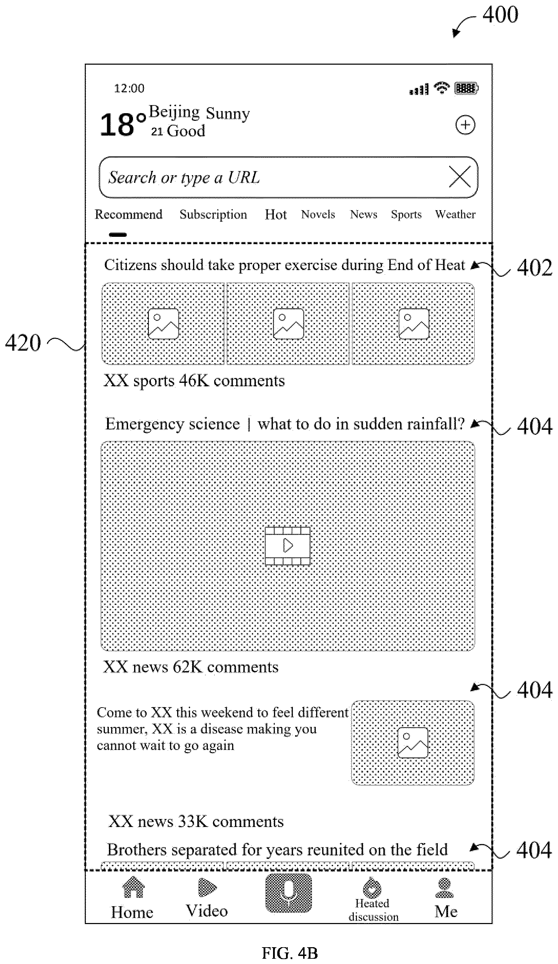

In an exemplary embodiment, the second threshold is 50% of an area of a content entry. As shown in FIGs. 4A and 4B, in a display interface 400, in response to determining that a display area, in a first page 410, of a second content entry 402 at the bottom of the first page 410 does not exceed the second threshold, the second content entry 402 is displayed at the top of the second page 420 that is displayed as a continuation, and a first content entry 404 is displayed blow the second content entry 402.

According to some embodiments, step S202 of displaying a second page as a continuation of a content entry displayed in the first page may further include: in response to determining that the display area of the second content entry in the first page exceeds the second threshold, displaying the first content entry at the top of the second page without displaying the second content entry. Therefore, the content entry whose display area at the bottom of the first page exceeds the threshold is not displayed, to avoid repeatedly displaying the content entry that a user has browsed, thereby improving content consumption efficiency of the user.

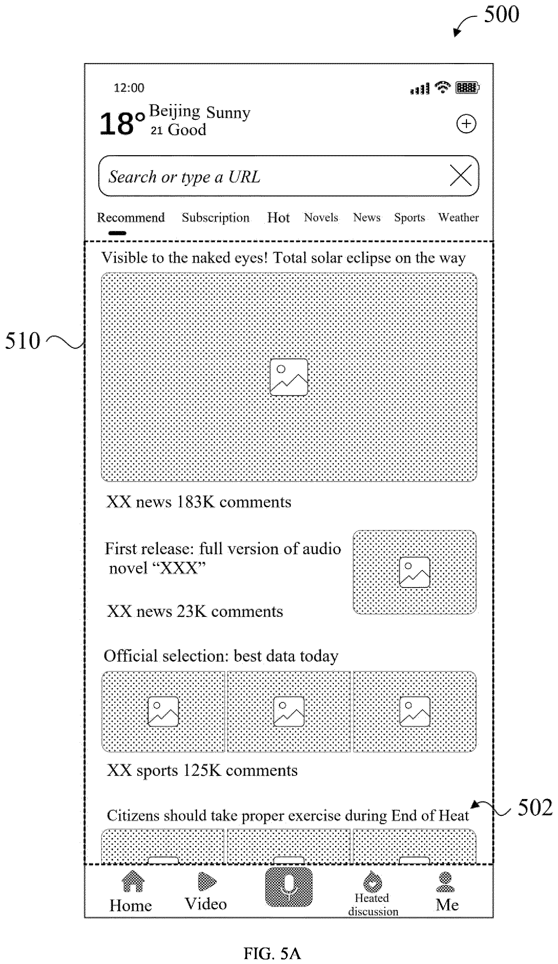

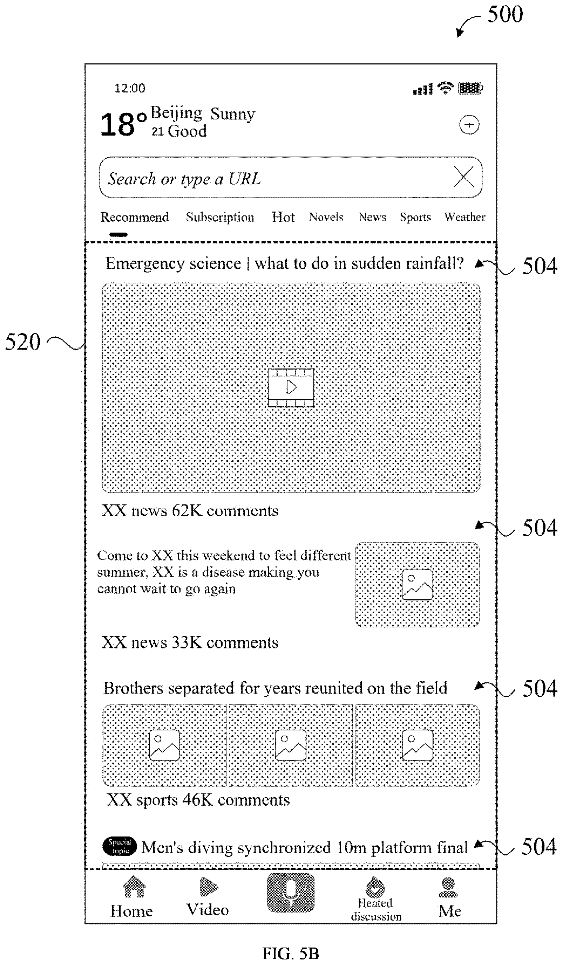

In another exemplary embodiment, the second threshold is 50% of an area of a content entry. As shown in FIGs. 5A and 5B, in a display interface 500, in response to determining that a display area, in a first page 510, of a second content entry 502 at the bottom of the first page 510 does not exceed 50% of the second threshold, a first content entry 504 is displayed at the top of a second page 520 without displaying the second content entry 502.

According to some embodiments, the second threshold may be 20%, 25%, 33.3%, 50%, 66.7%, 75%, or 80% of an area of a content entry, or another area size, which is not limited herein. In some embodiments, the content entry may include a title section at an upper part and a content preview section below the title section, and it may be considered that a user browses the content entry if the title section is displayed completely. Therefore, the second threshold may be set to a relatively small value, to avoid repeatedly displaying the content entry that the user has browsed. In some other embodiments, the content entry may not include the title section, or the title section is merged into the content preview section, and therefore, the second threshold needs to be set to a relatively large value, to ensure that the user obtains information related to the content entry. In some other embodiments, the second threshold may be dynamically adjusted based on different format structures of the content entry, to further adjust a balanced relationship between an information acquisition degree of the user for a content entry and avoidance of repeatedly displaying a content entry that the user has browsed. It can be understood that those of ordinary skill in the art may set the second threshold to a proper value by themselves according to requirements, to enable the user to obtain information related to the second content entry.

According to some embodiments, displaying the second page as a continuation of the content entry displayed in the first page is automatically performed. Therefore, through automatic page turning, the second page is displayed as a continuation of the content entry displayed in the first page, so that the user can begin, without an operation after returning to the application, to browse the content entry that is not browsed, thereby improving content consumption experience of the user and saving operation costs for the user.

According to some embodiments, displaying the second page as a continuation of the content entry displayed in the first page may be performed in response to detecting a first gesture input of the user. Considering that some users may not expect display of the second page as a continuation to be automatically performed, therefore a gesture input of the user may be detected, and the second page is displayed as a continuation after the first gesture input corresponding to the display as a continuation is detected, to present the content entry that the user has not browsed. Therefore, the user has higher autonomy on whether and when to browse the content entry that has not been browsed after returning to the application, thereby further improving browsing experience of the user having such requirements.

According to some embodiments, the first gesture input may be, for example, sliding upward, sliding downward, sliding leftward, or sliding rightward on a page, or clicking, double clicking, or long pressing a virtual button for displaying the second page as a continuation or a specific region in a display interface, or may be another gesture input manner, which is not limited herein.

It can be understood that, displaying the second page as a continuation of the content entry displayed in the first page may alternatively be performed in response to detecting another input of the user different from the gesture input, such as a voice input detected by an audio acquisition unit of the terminal device, a key-press input detected by an external input unit of the terminal device, an action input detected by an acceleration sensing unit of the terminal device, or a posture input detected by an image acquisition unit of the terminal device, which is not limited herein.

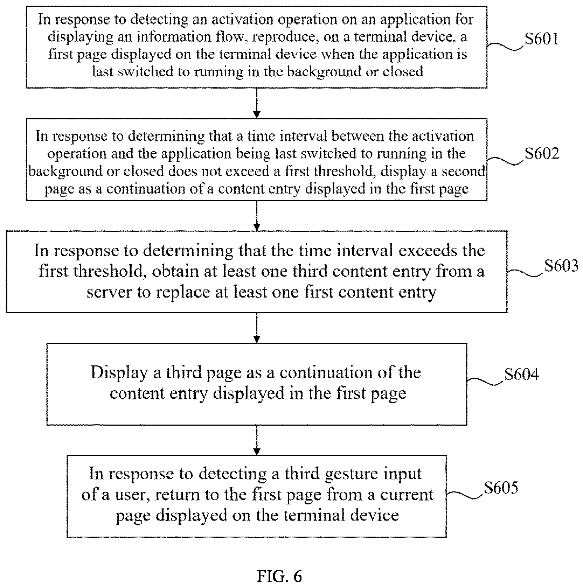

According to some embodiments, as shown in FIG. 6, the method for displaying an information flow may further include: step S603: in response to determining that the time interval exceeds the first threshold, obtaining at least one third content entry from a server to replace the at least one first content entry; and step S604: displaying a third page as a continuation of a content entry displayed in the first page, where the third page includes at least the third content entry. Operations of steps S601 and S602 in FIG. 6 are respectively similar to operations of steps S201 and S202 in FIG. 2. Details are not described herein again. Therefore, when the time interval exceeds the first threshold, a new content entry is obtained from the server to replace the content entry that is not browsed in a historical information flow, real-time performance of the information flow is enhanced.

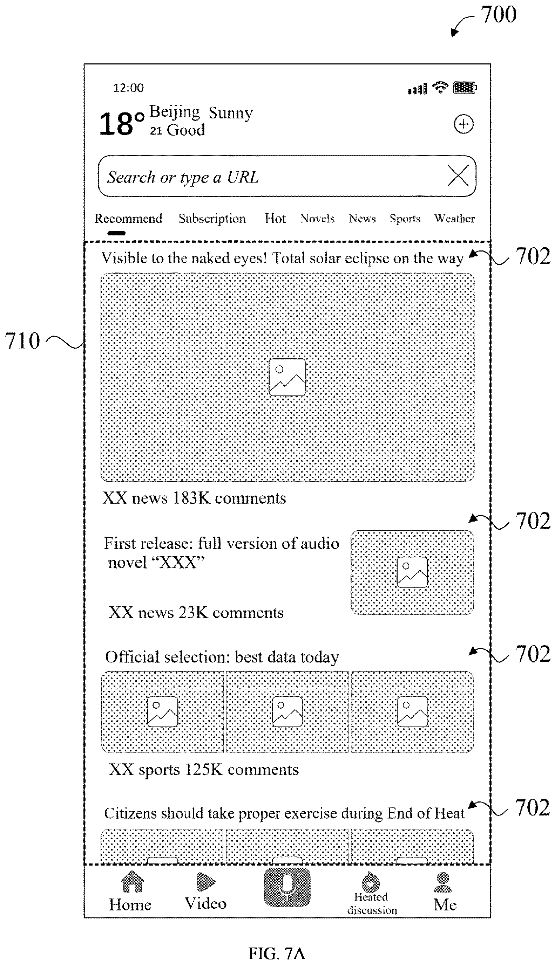

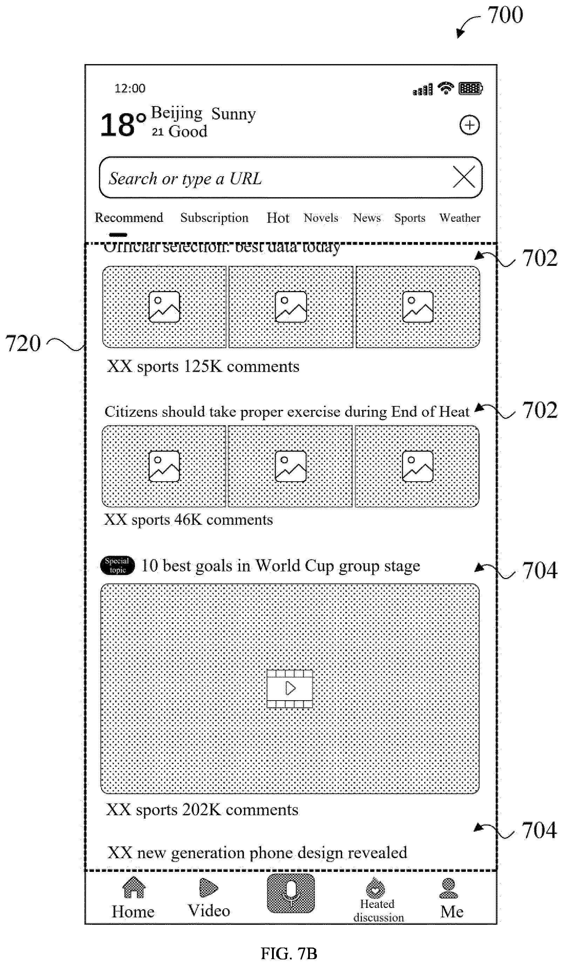

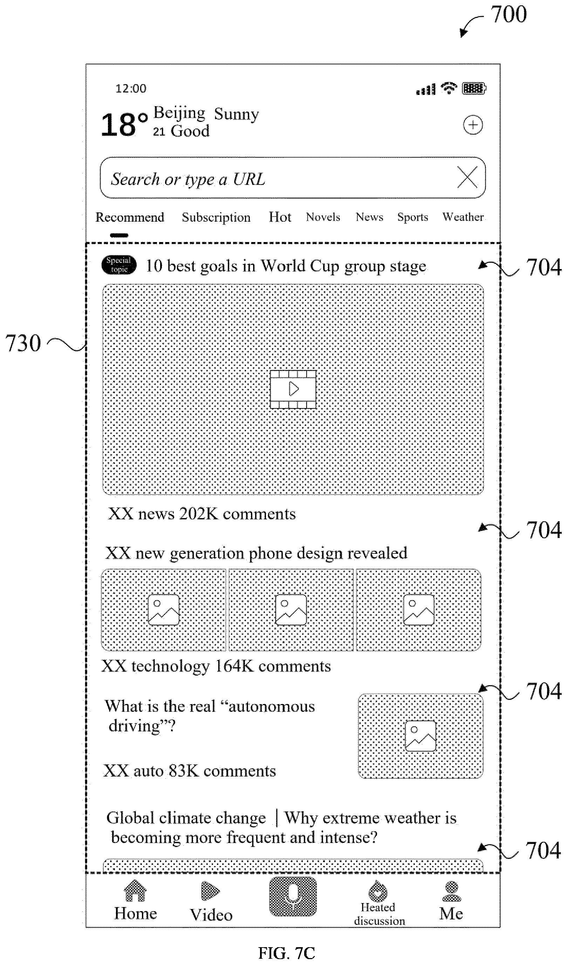

According to some embodiments, as shown in FIG. 7A, in a display interface 700, a first page 710 includes a plurality of browsed content entries 702. In an exemplary embodiment, the first page 710 in FIG. 7A is slid to transition to a third page 720 in FIG. 7B, where the third page 720 includes the plurality of browsed content entries 702 and a plurality of third content entries 704 obtained from the server to replace the first content entry. In another exemplary embodiment, the first page 710 in FIG. 7A is slid to transition to a third page 730 in FIG. 7C, where the third page 730 includes only the third content entries 704.

According to some embodiments, the first threshold may be, for example, 5 minutes, 10 minutes, 15 minutes, 30 minutes, 45 minutes, 60 minutes, 90 minutes, 120 minutes, or another duration, which is not limited herein. In some embodiments, a smaller value of the first threshold enables the user to obtain newly generated content more frequently, thereby improving real-time performance of an information flow browsed by the user. However, a terminal device needs to keep a long-term connection with the server and occupies specific bandwidth resources, and frequently refreshing the information flow on the server may increase the burden of the server. In addition, the information flow may partially overlap a historical information flow after the refreshing on the server, so that it is possible that a content entry that the user has browsed is displayed again on the terminal device. In some other embodiments, a larger value of the first threshold enables content entries that the user browses on the terminal device to have stronger time continuity, and the terminal device is no longer required to keep the long-term connection with the server, which only occupies less bandwidth resources and also eases a burden of the server. However, because a frequency of the server for updating the information flow is reduced, the real-time performance of the information flow browsed by the user decreases as well.

According to some embodiments, when an original information flow is generated, a special "first screen strategy" may be used to determine content for being displayed in a first page of the information flow and a corresponding format, to enhance the quality of the first page and increase a click rate and a conversion rate of the content entry for the user. The first screen strategy is used, the "first page" may be displayed to the user as much as possible while the historical information flow is retained, so that a large amount of high-quality content is provided for the user without interrupting a process of the user for reading and browsing the historical information flow, thereby further improving content consumption efficiency of the user and user experience.

According to some embodiments, step S604 of displaying a third page as a continuation of a content entry displayed in the first page may include: transitioning from the first page to the third page in a page sliding manner. Therefore, through transitioning from the first page to the third page in a page sliding manner, a visual prompt is provided for a customer to make a user perceive that the content entry in the first page and the content entry in the third page are continuous, so as to improve continuity for the user to browse an information flow.

According to some embodiments, displaying the third page as a continuation of the content entry displayed in the first page is automatically performed. Therefore, through automatic page turning, the third page is displayed as a continuation of the content entry displayed in the first page, so that the user can begin, without an operation after returning to the application, to browse a new content entry obtained from the server, so that a newly generated content entry can be automatically shown to the user, thereby further improving content consumption experience of the user and saving operation costs for the user.

According to some embodiments, as shown in FIG. 6, the method for displaying an information flow may further include: step S605: in response to detecting a third gesture input of the user, returning to the first page from a current page displayed the terminal device. Therefore, through the design of a corresponding page returning mechanism, the user can more conveniently return to a historical browsing position from where the user last leaves, thereby facilitating searching for impressive content or content of interest in the historical information flow.

According to some embodiments, the third gesture input may be, for example, clicking, double clicking, or long pressing a status bar at the top of an interface, or clicking, double clicking, or long pressing a virtual button for returning to the first page or a specific region in a display interface, or may be another gesture input manner, which is not limited herein.

It can be understood that, returning to the first page from the current page may alternatively be performed in response to detecting another input of the user different from the gesture input, such as a voice input detected by an audio acquisition unit of the terminal device, a key-press input detected by an external input unit of the terminal device, an action input detected by an acceleration sensing unit of the terminal device, or a posture input detected by an image acquisition unit of the terminal device, which is not limited herein.

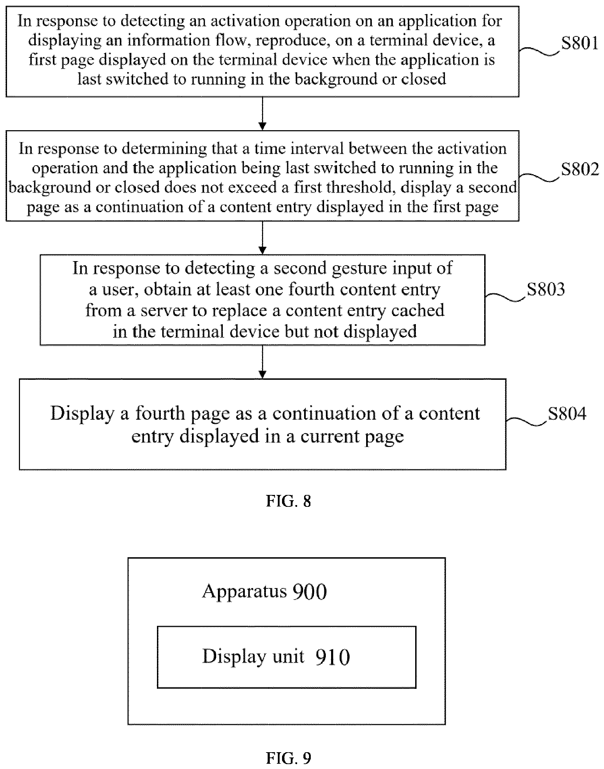

According to some embodiments, as shown in FIG. 8, the method for displaying an information flow may further include: Step S803: in response to detecting a second gesture input of the user, obtaining at least one fourth content entry from the server to replace the content entry cached in the terminal device but not displayed; and step S804: displaying a fourth page as a continuation of the content entry displayed in the current page, where the fourth page includes at least the fourth content entry. Operations of steps S801 and S802 in FIG. 8 are respectively similar to operations of steps S201 and S202 in FIG. 2. Details are not described herein again. Therefore, when the time interval does not exceed the first threshold, the user may alternatively begin to obtain new content manually to display the new content, thereby improving an autonomous operation space of the user and browsing experience of the user.

According to some embodiments, the second gesture input may be, for example, sliding downward, sliding upward, sliding leftward, or sliding rightward on a page, or clicking, double clicking, or long pressing a virtual button for displaying the fourth page as a continuation or a specific region in a display interface, or may be another gesture input manner, which is not limited herein.

It can be understood that, obtaining the at least one fourth content entry from the server may alternatively be performed in response to detecting another input of the user different from the gesture input, such as a voice input detected by an audio acquisition unit of the terminal device, a key-press input detected by an external input unit of the terminal device, an action input detected by an acceleration sensing unit of the terminal device, or a posture input detected by an image acquisition unit of the terminal device, which is not limited herein.

According to another aspect of the present disclosure, there is further provided an apparatus for displaying an information flow on a terminal device. As shown in FIG. 9, an apparatus 900 includes: a display unit 910, configured to: in response to detecting an activation operation on an application for displaying the information flow, reproduce, on the terminal device, a first page displayed on the terminal device when the application is last switched to running in the background or closed. The display unit is further configured to: in response to determining that a time interval between the activation operation and the application being last switched to running in the background or closed does not exceed a first threshold, display a second page as a continuation of a content entry displayed in the first page, where the second page includes at least one first content entry cached in the terminal device before the activation operation but not displayed in the first page. Operations of the unit 910 in the apparatus 900 are similar to operations of steps S201 and S202 in FIG. 2. Details are not described herein again.

According to some embodiments, the display unit 910 may be further configured to transition from the first page to the second page in a page sliding manner.

According to some embodiments, the content entry displayed in the first page may include a second content entry located at the bottom of the first page. The display unit 910 may be further configured to: in response to determining that a display area of the second content entry in the first page does not exceed a second threshold, display the second content entry at the top of the second page.

According to some embodiments, the display unit 910 may be further configured to: in response to determining that the display area of the second content entry in the first page exceeds the second threshold, display the first content entry at the top of the second page without displaying the second content entry.

According to some embodiments, displaying the second page as a continuation of the content entry displayed in the first page may be automatically performed.

According to some embodiments, displaying the second page as a continuation of the content entry displayed in the first page may be performed in response to detecting a first gesture input of the user.

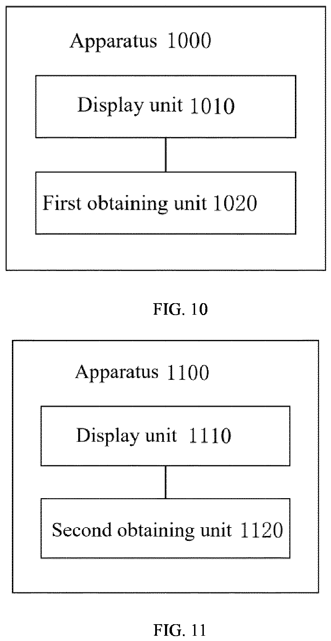

According to some embodiments, as shown in FIG. 10, an apparatus 1000 may further include: a first obtaining unit 1020, configured to: in response to determining that the time interval exceeds the first threshold, obtain at least one third content entry from a server to replace the at least one first content entry. Operations of a unit 1010 in the apparatus 1000 are similar to operations of the unit 910 in the apparatus 900. Details are not described herein again. The display unit 1010 may be further configured to display a third page as a continuation of a content entry displayed in the first page, where the third page includes at least the third content entry.

According to some embodiments, the display unit 1010 may be further configured to transition from the first page to the third page in a page sliding manner.

According to some embodiments, the display unit 1010 may be further configured to: in response to detecting a third gesture input of the user, return to the first page from the current page displayed on the terminal device.

According to some embodiments, as shown in FIG. 11, an apparatus 1100 may further include: a second obtaining unit 1120, configured to: in response to detecting a second gesture input of the user, obtain at least one fourth content entry from the server to replace the content entry cached in the terminal device but not displayed. Operations of a unit 1110 in the apparatus 1100 are similar to operations of the unit 910 in the apparatus 900. Details are not described herein again. The display unit 1110 may be further configured to display a fourth page as a continuation of the content entry displayed in the current page, where the fourth page includes at least the fourth content entry.

According to the embodiments of the present disclosure, there are further provided an electronic device, a readable storage medium, and a computer program product.

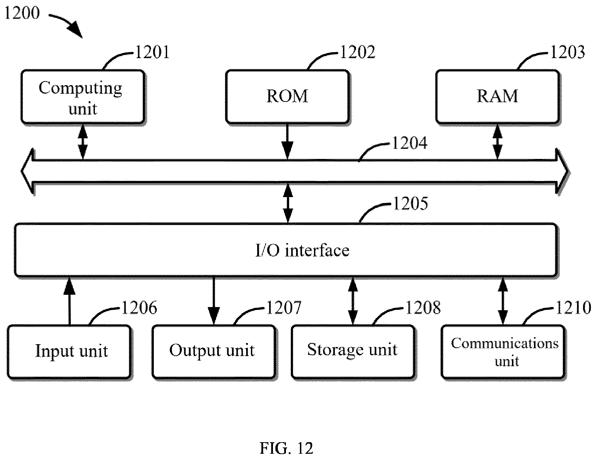

Referring to FIG. 12, a structural block diagram of an electronic device 1200 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 12, the device 1200 includes a computing unit 1201, which may perform various appropriate actions and processing according to a computer program stored in a read-only memory (ROM) 1202 or a computer program loaded from a storage unit 1208 to a random access memory (RAM) 1203. The RAM 1203 may further store various programs and data required for the operation of the device 1200. The computing unit 1201, the ROM 1202, and the RAM 1203 are connected to each other through a bus 1204. An input/output (I/O) interface 1205 is also connected to the bus 1204.

A plurality of components in the device 1200 are connected to the I/O interface 1205, including: an input unit 1206, an output unit 1207, the storage unit 1208, and a communications unit 1209. The input unit 1206 may be any type of device capable of entering information to the device 1200. The input unit 1206 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1207 may be any type of device capable of presenting information, and may include, but is not limited to, a display, a speaker, a video/audio output terminal, a vibrator, and/or a printer. The storage unit 1208 may include, but is not limited to, a magnetic disk and an optical disc. The communications unit 1209 allows the device 1200 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth^{™} device, an 802.11 device, a Wi-Fi device, a WiMAX device, a cellular communication device, and/or the like.

The computing unit 1201 may be various general-purpose and/or special-purpose processing components with processing and computing capabilities. Some examples of the computing unit 1201 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1201 performs the various methods and processing described above, for example, the method for displaying an information flow. For example, in some embodiments, the method for displaying the information flow may be implemented as a computer software program, which is tangibly contained in a machine-readable medium, such as the storage unit 1208. In some embodiments, a part or all of the computer program may be loaded and/or installed onto the device 1200 via the ROM 1202 and/or the communications unit 1209. When the computer program is loaded onto the RAM 1203 and executed by the computing unit 1201, one or more steps of the above method for displaying an information flow can be performed. Alternatively, in other embodiments, the computing unit 1201 may be configured, by any other suitable means (for example, by means of firmware), to perform the method for displaying an information flow.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: the systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present invention is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A method for displaying an information flow on a terminal device, comprising:
in response to detecting an activation operation on an application for displaying the information flow, reproducing, on the terminal device, a first page displayed on the terminal device when the application is last switched to running in the background or closed; and
in response to determining that a time interval between the activation operation and the application being last switched to running in the background or closed does not exceed a first threshold, displaying a second page as a continuation of a content entry displayed in the first page, wherein the second page comprises at least one first content entry cached in the terminal device before the activation operation but not displayed in the first page.

2. The method according to claim 1, wherein the displaying a second page as a continuation of a content entry displayed in the first page comprises:
transitioning from the first page to the second page in a page sliding manner.

3. The method according to claim 1 or 2, wherein the content entry displayed in the first page comprises a second content entry located at the bottom of the first page, and wherein
the displaying a second page as a continuation of a content entry displayed in the first page comprises:
in response to determining that a display area of the second content entry in the first page does not exceed a second threshold, displaying the second content entry at the top of the second page.

4. The method according to claim 3, wherein the displaying a second page as a continuation of a content entry displayed in the first page comprises:
in response to determining that the display area of the second content entry in the first page exceeds the second threshold, displaying the first content entry at the top of the second page without displaying the second content entry.

5. The method according to any one of claims 1 to 4, wherein the displaying a second page as a continuation of a content entry displayed in the first page is automatically performed.

6. The method according to any one of claims 1 to 4, wherein the displaying a second page as a continuation of a content entry displayed in the first page is performed in response to detecting a first gesture input of a user.

7. The method according to any one of claims 1 to 6, further comprising:
in response to determining that the time interval exceeds the first threshold, obtaining at least one third content entry from a server to replace the at least one first content entry; and
displaying a third page as a continuation of the content entry displayed in the first page, wherein the third page comprises at least the third content entry.

8. The method according to claim 7, wherein the displaying a third page as a continuation of the content entry displayed in the first page comprises:
transitioning from the first page to the third page in the page sliding manner.

9. The method according to any one of claims 1 to 6, further comprising:
in response to detecting a second gesture input of the user, obtaining at least one fourth content entry from the server to replace the content entry cached in the terminal device but not displayed; and
displaying a fourth page as a continuation of a content entry displayed in a current page, wherein the fourth page comprises at least the fourth content entry.

10. The method according to any one of claims 1 to 9, further comprising:
in response to detecting a third gesture input of the user, returning to the first page from the current page displayed on the terminal device.

11. An apparatus for displaying an information flow on a terminal device, comprising:
a display unit, configured to: in response to detecting an activation operation on an application for displaying the information flow, reproduce, on the terminal device, a first page displayed on the terminal device when the application is last switched to running in the background or closed,
wherein the display unit is further configured to: in response to determining that a time interval between the activation operation and the application being last switched to running in the background or closed does not exceed a first threshold, display a second page as a continuation of a content entry displayed in the first page, wherein the second page comprises at least one first content entry cached in the terminal device before the activation operation but not displayed in the first page.

12. The apparatus according to claim 11, wherein the display unit is further configured to transition from the first page to the second page in a page sliding manner.

13. The apparatus according to claim 11 or 12, wherein the content entry displayed in the first page comprises a second content entry located at the bottom of the first page, and wherein the display unit is further configured to: in response to determining that a display area of the second content entry in the first page does not exceed a second threshold, display the second content entry at the top of the second page.

14. The apparatus according to claim 13, wherein the display unit is further configured to:
in response to determining that the display area of the second content entry in the first page exceeds the second threshold, display the first content entry at the top of the second page without displaying the second content entry.

15. The apparatus according to any one of claims 11 to 14, wherein the displaying a second page as a continuation of a content entry displayed in the first page is automatically performed.

16. The apparatus according to any one of claims 11 to 14, wherein the displaying a second page as a continuation of a content entry displayed in the first page is performed in response to detecting a first gesture input of a user.

17. The apparatus according to any one of claims 11 to 16, further comprising:
a first obtaining unit, configured to: in response to determining that the time interval exceeds the first threshold, obtain at least one third content entry from a server to replace the at least one first content entry,
wherein the display unit is further configured to display a third page as a continuation of the content entry displayed in the first page, wherein the third page comprises at least the third content entry.

18. The apparatus according to claim 17, wherein the display unit is further configured to transition from the first page to the third page in a page sliding manner.

19. The apparatus according to any one of claims 11 to 16, further comprising:
a second obtaining unit, configured to: in response to detecting a second gesture input of the user, obtain at least one fourth content entry from the server to replace the content entry cached in the terminal device but not displayed,
wherein the display unit is further configured to display a fourth page as a continuation of a content entry displayed in a current page, wherein the fourth page comprises at least the fourth content entry.

20. The apparatus according to any one of claims 11 to 19, wherein the display unit is further configured to: in response to detecting a third gesture input of the user, return to the first page from the current page displayed on the terminal device.

21. An electronic device, comprising:
at least one processor; and
a memory communicatively connected to the at least one processor, wherein
the memory stores instructions executable by the at least one processor, and when executed by the at least one processor, the instructions cause the at least one processor to perform the method according to any one of claims 1 to 10.

22. A non-transitory computer-readable storage medium storing computer instructions, wherein the computer instructions are used to cause the computer to perform the method according to any one of claims 1 to 10.

23. A computer program product, comprising a computer program, wherein when the computer program is executed by a processor, the method according to any one of claims 1 to 10 is implemented.
